# EUROPEAN PATENT APPLICATION

(11) **EP 4 009 547 A1**
(43) Date of publication of application: **08.06.2022**
(21) Application number: 20849298.3
(22) Date of filing: 28.06.2020
(51) Int. Cl.: H04B 17/12

(54) **ANTENNA CALIBRATION METHOD, BASE STATION, AND STORAGE MEDIUM**

(30) Priority: 02.08.2019 CN 201910713913
(71) Applicant: ZTE Corporation, Shenzhen, Guangdong 518057 (CN)
(72) Inventor: SUN, Ying, Shenzhen, Guangdong 518057 (CN); ZENG, Zhaohua, Shenzhen, Guangdong 518057 (CN)
(74) Representative: Raynor, Simon Mark
(86) International application number: PCT/CN2020/098598
(87) International publication number: WO 2021/022937

(57) **Abstract**

Embodiments of the present disclosure provide an antenna correction method, a base station, and a storage medium. For each of cells in an SSCG, the base station determines correction times for an antenna joint correction for each of the cells, and then performs the antenna joint correction on the cell to determine a correction weight of the cell in response to the calibration time of a certain cell arriving. Considering that each of the cells in the SSCG shares the same antenna, when the base station determines the correction time for the antenna joint correction of each of the cells in the SSCG, it ensures that the correction times of each of the cells have no overlapping part, so that each of the cells in the SSCG can independently perform the antenna joint correction, thereby ensuring accuracy of the correction weights of each of the cells. Based on the correction weights, accuracy of broadcast weights of the SSCG can be improved, and performance of the SSCG can also be enhanced.

## Description

### TECHNICAL FIELD

The present application relates to the field of communications, and in particular, to an antenna correction method, a base station and a storage medium.

### BACKGROUND

Within a scope of an original single cell sector, the original single cell is cracked into multiple cracked cells through different broadcast weights, and each of the cracked cells uses an independent broadcast weight. With the design of the broadcast weights, each of the cracked cells may cover different physical areas as far as possible. Each of the cracked cells has independent and complete cell attributes, and a coverage of a smart space cell group (SSCG) formed by these cracked cells may reach a coverage level of the original single cell before cracking as much as possible. At the same time, since each of the cracked cells may perform a joint demodulation for an uplink transmission to eliminate interference, the reception performance may be improved; for a downlink transmission, time-frequency resources are doubled, which improves actual throughput on the basis of ensuring the coverage level of the original single cell.

The SSCG performance is based on that a beam direction formed based on the broadcast weight meets expectations, and the interference between the cracked cells is minimized while ensuring a coverage area. Therefore, the primary problem of realizing SSCG is to ensure accuracy of broadcast weight beamforming. For a frequency division duplex (FDD) massive MIMO (massive input and output) system, due to a large number of antenna channels, phases and amplitudes of each of antenna channel hardware may be inconsistent. This inconsistency may inevitably lead to the problem that the beam direction formed by the broadcast weights of the cracked cells does not meet design expectations, thereby affecting performance of the SSCG.

### SUMMARY

An antenna calibration method, a base station, and a storage medium provided by the embodiments of the present disclosure mainly solve the technical problem that design-based broadcast weights are unable to meet expected cell cracking effects due to inherent phase difference and amplitude difference of each of antenna channels in an frequency division duplex (FDD) massive MIMO (massive input and output) system, thereby affecting performance of a smart space cell group (SSCG) after cracking.

To solve the above technical problem, some embodiments of the present disclosure provide an antenna correction method, including:
determining a correction time for an antenna joint correction for each of cells in an SSCG, where the SSCG includes at least two cracked cells, and the correction times of any two cells in the SSCG have no overlapping part;
in response to the correction time of a cell in the SSCG arriving, performing the antenna joint correction on the cell to determine a correction weight of the cell.

Some embodiments of the present disclosure further provide a base station, including a processor, a memory and a communication bus, where:
the communication bus is configured to realize connection communication between the processor and the memory;
the processor is configured to execute one or more programs stored in the memory to implement the operations of the antenna correction method.

Some embodiments of the present disclosure further provide a storage medium, where the storage medium stores one or more programs that, when executed by one or more processors, allows the one or more processors to implement the operations of the antenna correction method.

The beneficial effects of the embodiments of the present disclosure are as follows.

According to the antenna correction method, the base station, and the storage medium provided by the embodiments of the present disclosure, for each of the cells in the SSCG, the base station determines the correction time for the antenna joint correction in the cells, and then performs the antenna joint correction on the cell to determine the correction weight of the cell in response to the correction time of a certain cell arriving. Considering that each of the cells in the SSCG shares the same antenna, when the base station determines the correction time for the antenna joint correction of each cell in the SSCG, it ensures that the correction times of each of the cells have no overlapping part, so that each cell in the SSCG may independently perform the antenna joint correction, thereby ensuring accuracy of the correction weights of each cell. Based on the correction weights, accuracy of the broadcast weights of the SSCG can be improved, and performance of the SSCG can be enhanced.

Other features and corresponding beneficial effects of the embodiments of the present disclosure are described in later parts of the specification, and it should be understood that at least some of the beneficial effects will become apparent from the description in the specification of the present disclosure.

### BRIEF DESCRIPTION OF THE DRAWINGS

FIG. 1 is a flowchart of an antenna correction method according to Embodiment 1 of the present disclosure.
FIG. 2 is a flowchart of performing an antenna joint correction on a cell based on a standard antenna correction sequence according to Embodiment 1 of the present disclosure.
FIG. 3 is a flowchart of an antenna downlink joint correction shown in Embodiment 1 of the present disclosure.
FIG. 4 is a flowchart of an antenna uplink joint correction shown in Embodiment 1 of the present disclosure.
FIG. 5 is a flowchart of an antenna downlink joint correction shown in Embodiment 2 of the present disclosure.
FIG. 6 is a schematic diagram of an uplink and downlink interaction between a base station and a terminal according to Embodiment 2 of the present disclosure.
FIG. 7 is a flowchart of an antenna downlink joint correction shown in Embodiment 3 of the present disclosure.
FIG. 8 is a schematic diagram of a hardware structure of a base station according to Embodiment 4 of the present disclosure.

### DETAILED DESCRIPTION

In order to make the purpose, the technical solution, and the advantages of the present disclosure clearer, the present disclosure will be described in detail through specific embodiments with reference to the accompanying drawings. It should be understood that the specific embodiments described here are only used to explain the present disclosure, but not to limit the present disclosure.

### Embodiment 1

A current FDD Massive MIMO system, in a TM9 mode, is usually based on a multi-user multiple-input multiple-output (MU-MIMO) method to achieve spatial division multiple access (SDMA). For SDMA in TM3 and TM4 modes, there are mainly two implementation modes: a multi-user (MU) mode and a cell soft splitting mode. By adding support for the cell soft splitting function based on learning from and retaining the advantages of automatic optimal interference isolation in the MU mode, a new function is defined: a smart space cell group (SSCG).

According to the foregoing introduction, the SSCG may split an original single cell into multiple cracked cells by a broadcasting weight. Generally, a number of the cracked cells in the SSCG is less than or equal to 4. A total coverage of these cracked cells is basically the same as that of the original single cell before cracking, but since the cracked cells may perform a joint demodulation during an uplink reception to eliminate interference, the performance of uplink reception is improved. For a downlink transmission, time-frequency resources are multiplied, which improves an actual throughput within a coverage area of the original single cell, improves user experience, and greatly releases capacity of a hotspot cell that is suppressed.

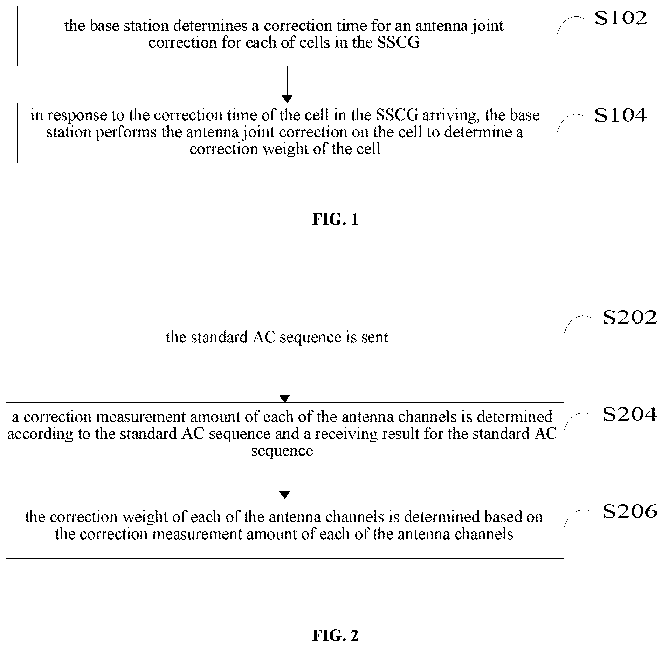

Considering that the SSCG is based on the FDD Massive MIMO system, the difference in amplitude and phase between multiple antenna channels in the FDD Massive MIMO system is likely to cause that a broadcast weight of the SSCG fails to achieve expected effects, thereby affecting coverage and performance of the SSCG. Therefore, referring to a flowchart of an antenna correction method shown in FIG. 1, this embodiment provides a method that can perform amplitude and phase correction on the antenna channel.

In S102, the base station determines a correction time for an antenna joint correction for each of cells in the SSCG.

In this embodiment, the SSCG includes at least two cracked cells. When the base station performs the antenna joint correction on the cells in the SSCG, it is necessary to ensure that a correction process of each of the cells is independent and correction times of each of the cells have no overlapping part. Although each of the cells in the SSCG has independent cell attributes, these cells actually use the same antenna entity for communication work. Therefore, when performing the antenna joint correction on the cell, it is necessary to avoid interference from other cells. Therefore, in this embodiment, the base station configures the correction times for each of the cells in the SSCG respectively, and ensures that these correction times have no overlapping part.

In some examples of this embodiment, the base station may associate a cell ID of each of the cells in the SSCG with a starting time of performing the antenna joint correction on the cell. For example, in an example of this embodiment, a correction starting time of the cell is Mod (CellID, 11)^{∗}60s.

In some examples of this embodiment, the base station may configure a correction period and the correction starting time for each of the cells. It can be understood that for each of the cells in the SSCG, the correction period may be the same. For example, in some examples, the correction period may be 8 subframes. The base station needs to configure the correction starting time of each of the cells separately, not only to ensure that the correction starting times of the cells are the same, but also to ensure that there is no case that when the antenna joint correction of one cell has not ended, the correction starting time of another cell arrives.

In S104, in response to the correction time of the cell in the SSCG arriving, the base station performs the antenna joint correction on the cell to determine a correction weight of the cell.

In this embodiment, in response to the correction time of the cell arriving, the base station may perform the antenna joint correction on the cell to obtain the correction weight of the cell.

The base station performs the antenna joint correction on the cell mainly based on a standard antenna correction (AC) sequence, and the standard AC sequence is a known sequence. FIG. 2 shows a flowchart of performing the antenna joint correction on the cell based on the standard AC sequence may be referred below.

In S202, the standard AC sequence is sent.

In S204, a correction measurement amount of each of the antenna channels is determined according to the standard AC sequence and a receiving result for the standard AC sequence.

The correction measurement amount includes a phase and an amplitude of the antenna channels.

In S206, the correction weight of each of the antenna channels is determined based on the correction measurement amount of each of the antenna channels.

In some examples of this embodiment, after the correction measurement amount of each of the antenna channels is obtained, the correction weight of each of the antenna channels may be directly determined according to the correction measurement amount. For example, after performing the antenna joint correction on the cell, the base station may directly select a channel from the antenna channels as a reference channel, and then determine a phase difference and an amplitude difference of other antenna channels relative to the reference channel as the correction weight of the cell.

In other examples of this embodiment, after determining the correction measurement amount of each of the antenna channels, the base station may first determine whether a current antennas joint correction is successful. Optionally, in some examples of this embodiment, the base station may determine whether the current antenna joint correction on the cell is successful according to a correction evaluation parameter of each of the antenna channels. If it is determined that the antenna joint correction is successful after judgment, the base station may determine the correction weight of the cell according to the correction measurement amount of each of the antenna channels. Otherwise, the base station may not determine the correction weight of the cell according to the correction measurement amount obtained by the current antenna joint correction.

In some examples of this embodiment, the correction evaluation parameter may be at least one of a signal-to-noise ratio (SNR), a channel delay, a channel power difference, a channel error, and the like. For example, in an example of this embodiment, the correction evaluation parameter is the signal-to-noise ratio. Therefore, after performing the antenna joint correction on a cell a, the base station may not only determine the amplitude and phase of each of the antenna channels in the cell a, but also determine the signal-to-noise ratio of each of the antenna channels, and then determine whether the signal-to-noise ratio of each of the antenna channels reaches a preset SNR threshold. If the signal-to-noise ratio of each of the antenna channels reaches the preset SNR threshold, it is determined that the antenna joint correction on the cell a is successful this time. Therefore, the base station may further perform operations of selecting the reference channel and the amplitude difference and the phase difference.

It can be understood that, in other examples of this embodiment, when the base station determines whether the antenna joint correction is successful based on the correction evaluation parameter of each of the antenna channels, the judgment condition is not necessarily that the correction evaluation parameters of the antenna channels all reach a certain level. For example, continuing to take the correction evaluation parameter as the signal-to-noise ratio as an example, in some examples of this embodiment, the base station may determine whether a number of antenna channels whose signal-to-noise ratio reaches the preset SNR threshold among all the antenna channels of the cell a reaches a certain proportion. If the number of antenna channels whose signal-to-noise ratio reaches the preset SNR threshold among all the antenna channels of the cell a reaches a certain proportion, it means that the antenna joint correction for the cell a is successful. On the contrary, it means that the current antenna joint correction for the cell a fails.

In this embodiment, in a case that the base station determines that the antenna joint correction for a certain cell fails, the base station may not determine the correction weight of the cell according to the correction measurement amount of the cell during an antenna joint correction process, but may use other methods to determine.

Method 1: A current correction weight of the cell is determined based on a historical correction weight of the cell.

For example, in some examples of this embodiment, after determining that the antenna joint correction of a cell b fails, the base station may determine the current correction weight based on a historical correction weight of the cell b. For example, it is assumed that the antenna joint correction is currently performed on the cell b for an nth time, but the current antenna joint correction fails. Therefore, the base station may select one of the correction weights obtained after first n-1 antenna joint corrections on the cell b as the current correction weight of the cell b.

Undoubtedly, the closer the antenna joint correction process to which a selected historical correction weight belongs is from the current time, the closer the selected historical correction weight is to the current actual correction weight of the cell. On the contrary, if a time interval is too long, there may be a result that the correction weight determined for the cell is very different from the actual situation. Therefore, in some examples of this embodiment, in a case that the current antenna joint correction on the cell fails, when the base station determines the historical correction weight of the cell as the current correction weight, the historical correction weight that is closer to the current time should be preferred. For example, if the cell currently performs the antenna joint correction for the nth time, a latest successful antenna joint correction of the cell is a n-mth time, and m is less than or equal to N, the correction weight of the n-mth antenna joint correction of the cell may be directly taken as the correction weight of the current antenna joint correction of the cell. Herein N is a positive integer, and in some examples of this embodiment, a value of N may be 2.

Method 2: The current correction weight of the cell is determined based on the current correction weight of other cells.

For example, the SSCG includes a cell a, a cell b, and a cell c. After the base station determines that a current antenna joint correction of the cell b fails, if antenna joint corrections of the cell a and the cell c are successful, the base station may determine the current correction weight of the cell b according to correction weights of the cell a and the cell c. Optionally, the base station may select a cell from the cell c and the cell c whose correlation with the cell b meets requirements as an associated cell of the cell b, and then directly take a current correction weight of the associated cell as the current correction weight of the cell b.

The "correlation meets requirements" herein actually means that the correlation is relatively strong. The strength of the correlation between one cell and another cell may be determined from their geographic locations, or from a communication process of the two cells. For example, if the cell b is not physically different from the cell a and the cell c, since the base station uses the same processing board to process communication services of the cell a and the cell b, and communication services of the cell c has to be implemented on another processing board due to a load capacity of the processing board. Then, from this point of view, the correlation between the cell b and the cell a is stronger, and the cell a is more qualified to be the associated cell of the cell b than the cell c.

In some examples of this embodiment, after the antenna joint correction of the cell fails, the base station may determine the correction weight of the cell by combining the above two methods.

If the cell currently performs the antenna joint correction for the nth time, the latest successful antenna joint correction is the n-mth time, and m is less than or equal to N, then the correction weight of the current antenna joint correction of the cell is equal to that of the n-mth antenna joint correction of the cell. That is, the base station assigns the correction weight of the nth antenna joint correction of the cell to the nth antenna joint correction as the correction weight.

If the cell currently performs the antenna joint correction for the nth time, the latest successful antenna joint correction is the n-mth time, and m is greater than N; or if the cell currently fails the antenna joint correction for n consecutive times, the correction weight of the current antenna joint correction of the cell is equal to the correction weight of the current antenna joint correction of the associated cell.

In a case that the antenna joint corrections of the cells in the SSCG all fail, an alarm notification will be issued.

Table 1 shows an example of determining the correction weight based on the above principle. It is assumed that the value of N is 2, and the correction period of each of the cells is K. And cell 0 and cell 1 are mutually associated cells, and cell 2 and cell 3 are mutually associated cells.

**Table 1**

| | | Cell 0 | Cell 1 | Cell 2 | Cell 3 |
|---|---|---|---|---|---|
| TO time | Correction successful or not | Successful | Successful | Successful | Successful |
| | Weight used | W00 | W01 | W02 | W03 |
| T0+K time | Correction successful or not | Successful | Fail | Successful | Fail |
| | Weight used | W10 | W01 | W12 | W03 |
| T0+2K time | Correction successful or not | Successful | Fail | Successful | Fail |
| | Weight used | W20 | W01 | W22 | W03 |
| T0+3K time | Correction successful or not | Fail | Fail | Fail | Fail |
| | Weight used | W20 | W20 | W22 | W22 |
| T0+4K time | Correction successful or not | Fail | Fail | Fail | Fail |
| | Weight used | W20 | W20 | W22 | W22 |
| T0+5K time | Correction successful or not | Fail | Fail | Fail | Fail |
| | Weight used | None, alarm | None, alarm | None, alarm | None, alarm |

It can be understood that the antenna joint correction on the cell is divided into two processes: an antenna downlink joint correction and an antenna uplink joint correction. The processes of the antenna downlink joint correction and the antenna uplink joint correction will be described below respectively.

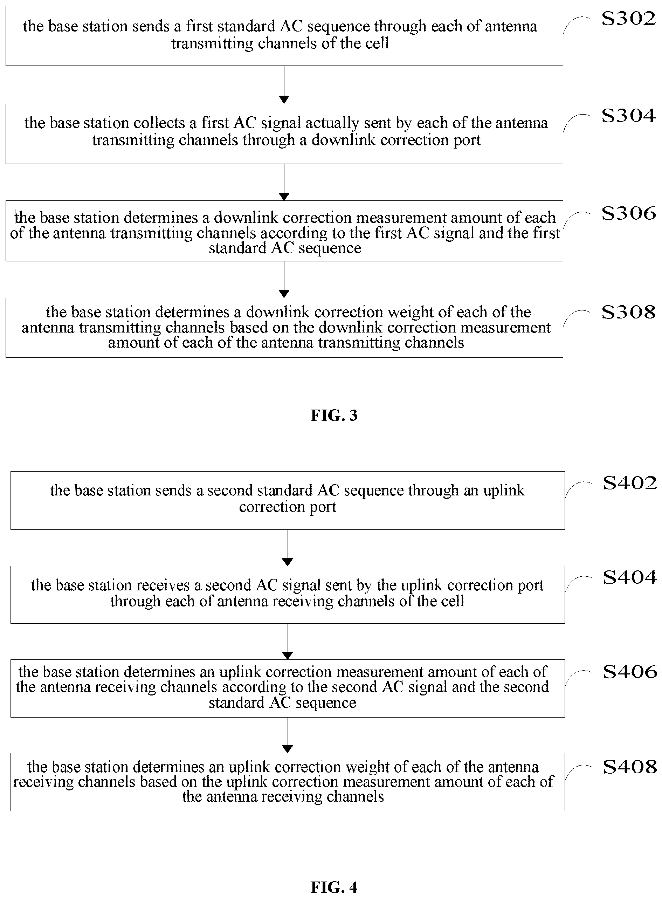

First, referring to FIG. 3, a flowchart of the antenna downlink joint correction is shown.

In S302, the base station sends a first standard AC sequence through each of antenna transmitting channels of the cell.

In S304, the base station collects a first AC signal actually sent by each of the antenna transmitting channels through a downlink correction port.

In S306, the base station determines a downlink correction measurement amount of each of the antenna transmitting channels according to the first AC signal and the first standard AC sequence.

In S308, the base station determines a downlink correction weight of each of the antenna transmitting channels based on the downlink correction measurement amount of each of the antenna transmitting channels.

The antenna downlink joint correction is mainly to determine an amplitude difference and a phase difference of the antenna transmitting channels, and realize correction for the antenna transmitting channels. Therefore, in a process of the antenna downlink joint correction, the main purpose is to determine deformation of a known signal caused by each of the antenna channels in the process of transmitting the known signal. In this embodiment, the first standard AC sequence is used as the known signal. The base station may send the first standard sequence through the antenna transmitting channels of each of the cells. On the other hand, the base station may use the downlink correction port to collect the first AC signal actually sent by each of the antenna transmitting channels immediately after the first standard AC sequence is sent out by the antenna transmitting channels. The first AC signal is the first standard AC sequence actually sent by each of the antenna transmitting channels. After collecting the first AC signal through the downlink correction port, the base station may estimate the phase and amplitude of each of the antenna transmitting channels based on the first AC signal and the first standard AC sequence. At the same time, the correction evaluation parameter is determined, and then whether the antenna downlink joint correction is successful is determined based on the correction evaluation parameter, and the downlink correction weight of the cell in this antenna downlink joint correction is determined based on the foregoing scheme.

Referring to FIG. 4 below, a flowchart of the antenna uplink joint correction is shown.

In S402, the base station sends a second standard AC sequence through an uplink correction port.

In S404, the base station receives a second AC signal sent by the uplink correction port through each of antenna receiving channels of the cell.

In S406, the base station determines an uplink correction measurement amount of each of the antenna receiving channels according to the second AC signal and the second standard AC sequence.

In S408, the base station determines an uplink correction weight of each of the antenna receiving channels based on the uplink correction measurement amount of each of the antenna receiving channels.

The antenna uplink joint correction is mainly to determine an amplitude difference and a phase difference of the antenna receiving channels, and realize correction of the antenna receiving channels. Therefore, in a process of the antenna uplink joint correction, the main purpose is to determine the deformation of a known signal caused by each of the antenna channels in the process of receiving the known signal. In this embodiment, the second standard AC sequence is used as the known signal. The base station sends the second standard AC sequence through the uplink correction port, and then uses each of the antenna receiving channels to receive the second standard AC sequence to obtain the second AC signal. The second AC signal is a receiving result for the second standard AC sequence by each of the antenna receiving channels of the cell. After receiving the second AC signal through the antenna receiving channels of the cell, the base station may estimate the phase and amplitude of each of the antenna receiving channels based on the second AC signal and the second standard AC sequence. At the same time, the correction evaluation parameter is determined, and whether the antenna uplink joint correction is successful is determined based on the correction evaluation parameter, and the uplink correction weight of the cell in this antenna uplink joint correction is determined based on the foregoing scheme.

It can be understood that, the first standard AC sequence and the second standard AC sequence may be the same sequence, or may be different sequences, which has no significant impact on the implication of this embodiment.

In the antenna correction method provided in this embodiment, independent correction starting time is set for each of the cells in the SSCG, so that the antenna joint correction process of each of the cells is independent, and the correction weight of each of the cells may be accurately obtained, which is conducive to overcoming the problem caused by the phase difference and amplitude difference of each of the antenna channels itself. As a result, the cell performance based on broadcast weight cracking is better, performance of the communication system is improved, and communication experience on a user side is enhanced.

Further, in the antenna correction method provided in this embodiment, when the antenna joint correction is performed on the cell, whether the antenna correction is successful may be evaluated based on the correction evaluation parameter obtained in the antenna joint correction process. And only when the antenna correction is successful, the correction weight of this antenna joint correction may be determined based on the correction measurement amount. Otherwise, the current correction weight of the cell may be determined by "referencing" the historical correction weight of the same cell or by "referencing" the current correction weight of the associated cell to ensure accuracy of the correction weight and avoid the problem that the correction weight determined based on the correction measurement amount is inaccurate and affects the performance of the cell in the SSCG when the antenna joint correction fails.

### Embodiment 2

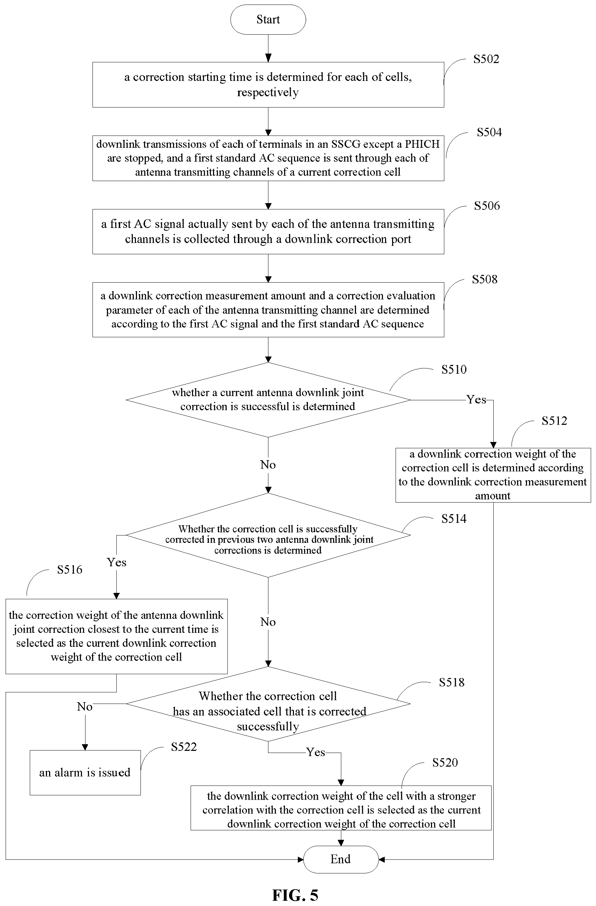

Referring to a flowchart of an antenna downlink joint correction shown in FIG. 5, this embodiment may describe an antenna correction method on the basis of the foregoing embodiment.

In S502, a correction starting time is determined for each of cells, respectively.

In an example of this embodiment, the base station sets the correction starting time of each of the cells as Mod(CellID, 11)^{∗}60s.

In S504, downlink transmissions of each of terminals in an SSCG except a physical hybrid ARQ indicator channel (PHICH) are stopped, and a first standard AC sequence is sent through each of antenna transmitting channels of a current correction cell.

It can be understood that, since the antenna downlink joint correction is to verify the antenna transmitting channels, if the base station performs the downlink transmissions to the terminals in the SSCG at the same time when performing the antenna downlink joint correction, communication information of the downlink transmissions may affect a correction result of the antenna downlink joint correction. Therefore, in some examples of this embodiment, when performing the antenna downlink joint correction on the cell (that is, a correction cell), the base station may try to control and stop performing the downlink transmissions for each of the terminals in the SSCG (including terminals in the correction cell and non-correction cells). The downlink transmission mentioned here includes a downlink channel scheduling and an uplink grant, such as a physical downlink control channel (PDCCH), a physical downlink shared channel (PDSCH), a physical broadcast channel (PBCH), a primary synchronization signal/secondary synchronization signal (PSS/SSS) and other scheduling.

However, it should be noted that the PHICH is a feedback from the base station to an uplink transmission result of the terminal. Therefore, if the terminal is still unable to get the feedback from the base station after completing the uplink transmission, the terminal may continuously perform the uplink transmission to the base station, thereby affecting an antenna joint correction process of the base station. Therefore, in some examples of this embodiment, when the base station restricts the downlink transmissions of each of the terminals in the SSCG, the PHICH scheduling may not be stopped.

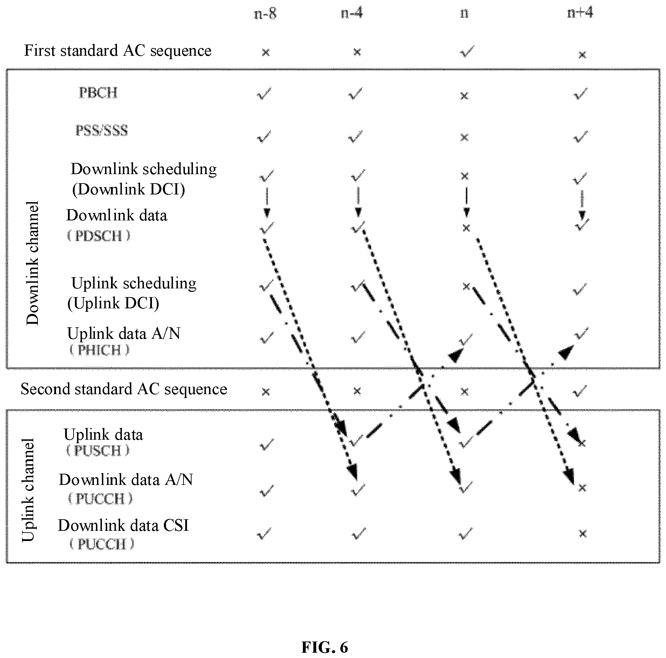

Considering that processes of the antenna downlink joint correction and the antenna uplink joint correction of the cell may be performed successively, if the base station feeds back a NACK indicating negation for a service of a certain terminal during the process of the antenna downlink joint correction, the terminal may perform the uplink transmission again in the fourth subframe after the feedback, which may affect the antenna uplink joint correction process on a base station side. As shown in FIG. 6, it is assumed that a subframe n is a time when the antenna downlink joint correction is performed on the cell, and a subframe n+4 is a time when the antenna uplink joint correction is performed on the cell. In FIG. 6, "√" indicates a scheduling that may be performed; "×" indicates a scheduling that may be stopped; A "---- >" B indicates that the PDSCH sent by the base station at time A receives the feedback from the terminal at time B; A "-•-•->" B indicates that the DCI sent by the base station at time A for an uplink data scheduling gets a response from the terminal at time B; A "→" B indicates that the DCI sent by the base station at time A for a downlink data scheduling starts to take effect at time B; B "-••-••->" C indicates that the uplink data uploaded by the terminal at time B gets a receiving feedback from the base station at time C. Therefore, in some examples of this embodiment, the base station sends an ACK indicating a successful scheduling to a corresponding terminal for all uplink services in the SSCG that are not responded during the antenna downlink joint correction, regardless of whether corresponding uplink services are successfully transmitted. After the current antenna joint correction is completed, the base station may determine the services that fail to be actually scheduled among the uplink services responded at the downlink correction time, and then reschedule these services that fail to be actually scheduled.

In some examples of this embodiment, the base station may send the first standard AC sequence through each of the antenna transmitting channels of the current correction cell while stopping the downlink transmissions except the PHICH for each of the terminals in the SSCG. In other examples of this embodiment, the base station first stops the downlink transmissions of each of the terminals in the SSCG except the PHICH, and then sends the first standard AC sequence through each of the antenna transmitting channels of the current correction cell.

In S506, a first AC signal actually sent by each of the antenna transmitting channels is collected through a downlink correction port.

After the antenna transmitting channel sends the first standard AC sequence, the base station immediately uses the downlink correction port to collect the first AC signal actually sent by each of the antenna transmitting channels. The first AC signal is the first standard AC sequence actually sent by each of the antenna transmitting channels.

In S508, a downlink correction measurement amount and a correction evaluation parameter of each of the antenna transmitting channel are determined according to the first AC signal and the first standard AC sequence.

The downlink correction measurement amount in this embodiment refers to an amplitude and a phase of the antenna transmitting channels, and the correction evaluation parameter may be a signal-to-noise ratio or a channel delay, a channel power difference, and a channel error. It can be understood that the correction evaluation parameter may also include multiple types at the same time. For example, the correction evaluation parameter may include the channel delay, the channel error and the channel power difference at the same time.

In S510, whether a current antenna downlink joint correction is successful is determined according to the correction evaluation parameter.

In response to the current antenna downlink joint correction being successful, S512 is performed; in response to the current antenna downlink joint correction being failure, S514 is performed.

Assuming that the correction evaluation parameter is only the signal-to-noise ratio, the base station may determine whether the signal-to-noise ratio of each of the antenna transmitting channels in the correction cell reaches a preset SNR threshold. If the signal-to-noise ratio of each of the antenna transmitting channels in the correction cell reaches the preset SNR threshold, the joint correction is successful; otherwise it is determined that the current downlink joint correction of the correction cell fails.

In S512, a downlink correction weight of the correction cell is determined according to the downlink correction measurement amount.

In a case that the current antenna downlink joint correction is successful, the base station may select a reference channel from the antenna transmitting channels, use a phase and amplitude of the reference channel as a reference, and then determine a phase difference and an amplitude difference between other antenna transmitting channels and the reference channel respectively as the downlink correction weight of the corresponding antenna transmitting channel.

In S514, whether the correction cell is successfully corrected in previous two antenna downlink joint corrections is determined.

In a case that the current antenna downlink joint correction of the correction cell fails, the base station needs to determine the downlink correction weight for the correction cell in other ways. In this embodiment, the base station preferably adopts the downlink correction weight of the correction cell itself in recent downlink joint correction process of other antennas as the current downlink correction weight of the correction cell. Therefore, in a case that the base station determines that the current antenna downlink joint correction fails, the base station may determine whether the correction cell is successfully corrected in the previous two antenna downlink joint corrections. In response to the correction cell being successfully corrected in the previous two antenna downlink joint corrections, S516 is performed; in response to the correction cell being failure corrected in the previous two antenna downlink joint corrections, S518 is performed.

In S516, the correction weight of the antenna downlink joint correction closest to the current time is selected as the current downlink correction weight of the correction cell.

For example, if a certain cell fails to be corrected during a nth antenna downlink joint correction, but the cell is successfully corrected during n-1th and n-2th antenna downlink joint corrections, the base station may choose a downlink correction weight of a n-1th antenna downlink joint correction process that is closer to the current time as a nth downlink correction weight of the cell.

In S518, whether the correction cell has an associated cell that is corrected successfully in the current antenna downlink joint correction is determined.

If the base station determines that the correction cell is not successfully corrected in recent times, the base station may choose to learn from a current downlink correction weight of the associated cell as the current downlink correction weight of the correction cell. Therefore, the base station determines whether the correction cell has an associated cell that is corrected successfully in the current antenna downlink joint correction.

In this embodiment, it is assumed that all cells in the SSCG are associated cells with each other, but strengths of correlations between the cells are different. Therefore, when the base station determines whether the correction cell has an associated cell that is successfully corrected, the base station determines whether there is an antenna joint downlink correction in the SSCG in fact. In response to there being the antenna joint downlink correction in the SSCG, S520 is performed; in response to there not being the antenna joint downlink correction in the SSCG, S522 is performed.

In S520, the downlink correction weight of the cell with a stronger correlation with the correction cell is selected as the current downlink correction weight of the correction cell.

When the base station uses the downlink correction weight of the associated cell as the current downlink correction weight of the correction cell, the base station may prefer the downlink correction weight of the cell with a stronger correlation with the correction cell. For example, if the SSCG includes cell 0, cell 1, cell 2, and cell 3, and for cell 0, the correlations with cell 1, cell 2, and cell 3 gradually decrease, the base station may preferably select a current downlink correction weight of cell 1 as the downlink correction weight of cell 0.

In S522, an alarm is issued.

If the base station determines that all the cells in the SSCG currently fail to be corrected, the base station may issue the alarm to notify a network administrator of the situation.

The antenna correction method provided in this embodiment is applied to a scenario of the antenna downlink joint correction. The antenna correction method not only performs independent downlink correction for each of the cells in the SSCG, but also limits the downlink transmissions of the terminals in the SSCG during the process of the antenna downlink joint correction, thereby improving accuracy of the antenna downlink joint correction result of the cell and enhancing performance of the SSCG.

### Embodiment 3

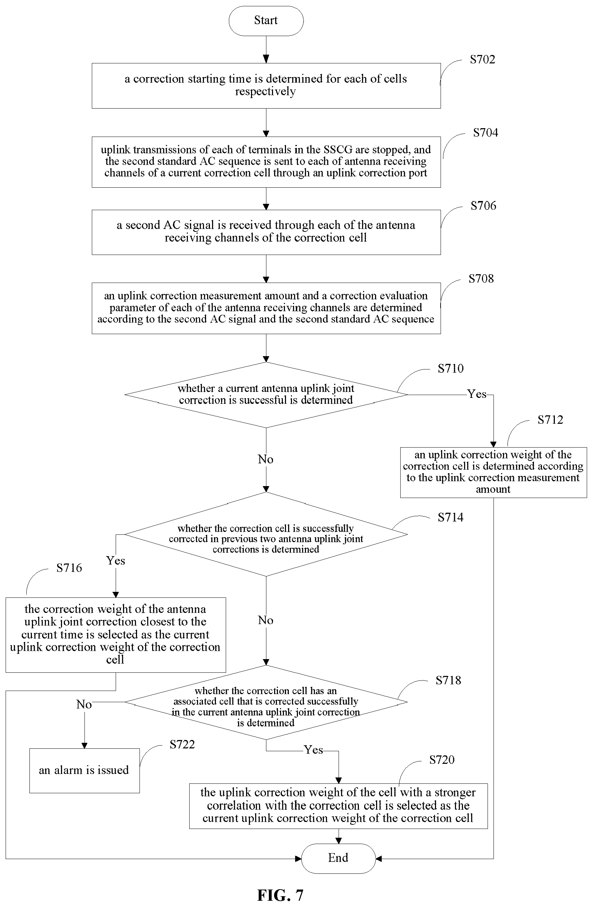

Referring to a flowchart of an antenna uplink joint correction shown in FIG. 7, this embodiment will describe an antenna correction method on the basis of the foregoing embodiments.

In S702, a correction starting time is determined for each of cells respectively.

In an example of this embodiment, the base station sets the correction starting time of each of the cells as Mod(CellID, 11)^{∗}60s.

In S704, uplink transmissions of each of terminals in the SSCG are stopped, and the second standard AC sequence is sent to each of antenna receiving channels of a current correction cell through an uplink correction port.

It can be understood that, since the antenna uplink joint correction is to verify antenna receiving channels, if the terminal in the SSCG simultaneously performs uplink transmissions during a process that the base station performs the antenna uplink joint correction, communication information in the uplink transmissions may affect a correction result of the antenna uplink joint correction. Therefore, in some examples of this embodiment, when performing the antenna uplink joint correction on the cell (that is, the correction cell), the base station may stop the uplink transmissions of each of the terminals in the SSCG (including terminals in the correction cell and non-correction cells). The uplink transmission mentioned here includes uplink data, a downlink A/N feedback and a channel-state information (CSI) feedback reception.

In some examples of this embodiment, the base station may send the second standard AC sequence to each of the antenna receiving channels of the current correction cell through the uplink correction port while stopping the uplink transmissions of each of the terminals in the SSCG. In other examples of this embodiment, the base station may first stop the uplink transmissions of each of the terminals in the SSCG, and then send the second standard AC sequence to each of the antenna receiving channels of the current correction cell through the uplink correction port.

In S706, a second AC signal is received through each of the antenna receiving channels of the correction cell.

After sending the second standard AC sequence at the uplink correction port, the base station immediately uses each of the antenna receiving channels of the correction cell to receive the second AC signal. The second AC signal is an actual receiving result for the second standard AC sequence by each of the antenna receiving channels.

In S708, an uplink correction measurement amount and a correction evaluation parameter of each of the antenna receiving channels are determined according to the second AC signal and the second standard AC sequence.

In this embodiment, the uplink correction measurement amount refers to an amplitude and a phase of the antenna receiving channels, and the correction evaluation parameter may be a signal-to-noise ratio or a channel delay, a channel power difference, and a channel error. It can be understood that the correction evaluation parameter may also include multiple types at the same time. For example, the correction evaluation parameter may include the channel delay, the channel error and the channel power difference at the same time.

In S710, whether a current antenna uplink joint correction is successful is determined according to the correction evaluation parameter.

In response to the current antenna uplink joint correction being successful, S712 is performed; in response to the current antenna uplink joint correction being failure, S714 is performed.

Assuming that the correction evaluation parameter is only the signal-to-noise ratio, the base station may determine whether the signal-to-noise ratio of each of the antenna receiving channels in the correction cell reaches a preset SNR threshold. If the signal-to-noise ratio of each antenna receiving channel in the correction cell reaches a preset SNR threshold, the joint correction is successful; otherwise it is determined that the current uplink joint correction of the correction cell fails.

In S712, an uplink correction weight of the correction cell is determined according to the uplink correction measurement amount.

In a case that the current antenna uplink joint correction is successful, the base station may select a reference channel from each of the antenna receiving channels, use a phase and amplitude of the reference channel as a reference, and then determine a phase difference and an amplitude difference between other antenna receiving channels and the reference channel as the uplink correction weight of a corresponding antenna receiving channel.

In S714, whether the correction cell is successfully corrected in previous two antenna uplink joint corrections is determined.

In a case that the current antenna uplink joint correction of the correction cell fails, the base station needs to determine the uplink correction weight for the correction cell in other ways. In this embodiment, the base station preferably adopts the uplink correction weight of the correction cell itself in recent uplink joint correction process of other antennas as the current uplink correction weight of the correction cell. Therefore, in a case that the base station determines that the current antenna uplink joint correction fails, the base station may determine whether the correction cell is successfully corrected in the previous two antenna uplink joint corrections. In response to the correction cell being successfully corrected in the previous two antenna uplink joint corrections, S716 is performed; in response to the correction cell not being successfully corrected in the previous two antenna uplink joint corrections, S718 is performed.

In S716, the correction weight of the antenna uplink joint correction closest to the current time is selected as the current uplink correction weight of the correction cell.

For example, if a certain cell fails to be corrected during a nth antenna uplink joint correction, but the cell is successfully corrected during a n-1th and a n-2th antenna uplink joint corrections, the base station may select the uplink correction weight in the n-1th antenna uplink joint correction process that is closer to the current time as the nth uplink correction weight of the cell.

In S718, whether the correction cell has an associated cell that is corrected successfully in the current antenna uplink joint correction is determined.

If the base station determines that the correction cell is not successfully corrected in recent times, the base station may choose to learn from the current uplink correction weight of the associated cell as the current uplink correction weight of the correction cell. Therefore, the base station determines whether the correction cell has an associated cell that is successfully corrected in the current antenna uplink joint correction.

In this embodiment, it is assumed that all cells in the SSCG are associated cells with each other, but strengths of correlations between the cells are different. Therefore, when the base station determines whether the correction cell has an associated cell that is successfully corrected, the base station determines whether there is the antenna uplink joint correction of the cell in the SSCG in fact. In response to there being the antenna uplink joint correction of the cell in the SSCG, S720 is performed; in response to there not being the antenna uplink joint correction of the cell in the SSCG, S722 is performed.

In S720, the uplink correction weight of the cell with a stronger correlation with the correction cell is selected as the current uplink correction weight of the correction cell.

When the base station uses the uplink correction weight of the associated cell as the current uplink correction weight of the correction cell, the base station may prefer the uplink correction weight of the cell with a stronger correlation with the correction cell. For example, if the SSCG includes cell 0, cell 1, cell 2, and cell 3, and for cell 0, correlations with cell 1, cell 2, and cell 3 gradually decrease, the base station may preferably select the current uplink correction weight of cell 1 as the uplink correction weight of cell 0.

In S722, an alarm is issued.

If the base station determines that all cells in the SSCG currently fail to be corrected, the base station may issue an alarm to notify a network administrator of the situation.

The antenna correction method provided in this embodiment is applied to a scenario of the antenna uplink joint correction. The antenna correction method not only performs independent uplink correction on each of the cells in the SSCG, but also limits the uplink transmissions of the terminals in the SSCG during the process of the antenna uplink joint correction, thereby improving accuracy of the antenna uplink joint correction result of the cell and enhancing performance of the SSCG.

### Embodiment 4

This embodiment provides a storage medium which may store one or more computer programs that may be read, compiled and executed by one or more processors. In this embodiment, the storage medium may store an antenna correction program which may be executed by one or more processors to execute the process of implementing any one of the antenna correction methods described in the foregoing embodiments.

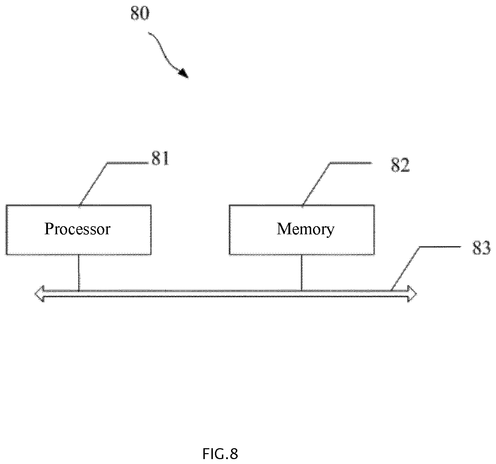

In addition, this embodiment provides a base station. As shown in FIG. 8, the base station 80 includes a processor 81, a memory 82, and a communication bus 83 for connecting the processor 81 and the memory 82, where the memory 82 may be the aforementioned storage medium storing the antenna correction program. The processor 81 may read and compile the antenna correction program, and execute the process of implementing the antenna correction method described in the foregoing embodiments.

The processor 81 determines a correction time of an antenna joint correction for each of cells in an SSCG, and in response to the correction time for a cell in the SSCG arriving, performs the antenna joint correction on the cell to determine a correction weight of the cell. In this embodiment, the SSCG includes at least two cracked cells, and the correction times of any two cells in the SSCG have no overlapping part.

When performing the antenna joint correction on the cell to determine the correction weight of the cell, the processor 81 may first send a standard antenna correction AC sequence. A correction measurement amount of each of antenna channels is determined according to the standard AC sequence and a receiving result for the standard AC sequence, where the correction measurement amount includes an amplitude and a phase. Then, the correction weight of each of the antenna channels is determined based on the correction measurement amount of each of the antenna channels.

When determining the correction weight of each of the antenna channels based on the correction measurement amount of each of the antenna channels, the processor 81 may first determine whether a current antenna joint correction of the cell is successful according to a correction evaluation parameter of each of the antenna channels. In response to the current antenna joint correction of the cell being successful, a reference channel is selected from the antenna channels of the cell. Then, a phase difference and an amplitude difference of each of other antenna channels relative to the reference channel are calculated as the correction weight of the cell.

In a case that the processor 81 determines that the current antenna joint correction of the cell fails, if the cell currently performs the antenna joint correction for a nth time, a latest successful antenna joint correction is a n-mth time, and m is less than or equal to N, and N is greater than or equal to 1, the processor 81 selects a correction weight of the n-mth antenna joint correction of the cell as the correction weight of the current antenna joint correction of the cell. If the cell currently performs the antenna joint correction for the nth time, and the latest successful antenna joint correction is the n-mth time, and m is greater than N; or the cell currently fails the antenna joint correction for n consecutive times, the processor 81 selects a correction weight of the current antenna joint correction of an associated cell as the correction weight of the current antenna joint correction of the cell. If the antenna joint corrections of the cells in the SSCG all fail, the processor 81 issues an alarm notification.

In some examples of this embodiment, the correction evaluation parameter includes at least one of a signal-to-noise ratio, a channel delay, a channel power difference, and a channel error.

The antenna joint correction includes an antenna downlink joint correction, the correction weight includes a downlink correction weight, and a correction time includes a downlink correction time. Performing the antenna joint correction on the cell by the processor 81 to determine the correction weight of the cell includes the following operations.

The processor 81 sends a first standard AC sequence through each of antenna transmitting channels of the cell, and then collects a first AC signal actually sent by each of the antenna transmitting channels through a downlink correction port. Then a downlink correction measurement amount of each of the antenna transmitting channels is determined according to the first AC signal and the first standard AC sequence, and then the downlink correction weight of each of the antenna transmitting channels is determined based on the downlink correction measurement of each of the antenna transmitting channels.

In some examples of this embodiment, during the downlink correction time for the cell, the processor 81 stops downlink transmissions of each of terminals in the SSCG except a physical hybrid ARQ indicator channel (PHICH).

During the downlink correction time, the processor 81 sends an ACK indicating a successful scheduling to a corresponding terminal through the PHICH for all uplink services in the SSCG that are not responded.

After the current antenna joint correction is completed, the processor 81 determines the services that fail to be actually scheduled among the uplink services responded at the downlink correction time; and then reschedules the services that fail to be actually scheduled.

The antenna joint correction includes an antenna uplink joint correction, the correction weight includes an uplink correction weight, and the correction time includes an uplink correction time. Performing the antenna joint correction on the cell to determine the correction weight of the cell includes the following operations.

The processor 81 sends a second standard AC sequence through an uplink correction port, and then receives a second AC signal sent by the uplink correction port through each of antenna receiving channels of the cell. An uplink correction measurement amount of each of the antenna receiving channels is determined according to the second AC signal and the second standard AC sequence. The uplink correction weight of each of the antenna receiving channels is then determined based on the uplink correction measurement amount of each of the antenna receiving channels.

In some examples, the processor 81 stops uplink transmissions of each of the terminals in the SSCG within the uplink correction time.

In the base station provided in this embodiment, an independent correction starting time is set for each of the cells in the SSCG, so that the antenna joint correction process of each of the cells is independent, and the correction weight of each of the cells may be accurately obtained, which is conducive to overcoming the phase difference and amplitude difference of each of the antenna channels. As a result, cell performance based on broadcast weight cracking is better, performance of the communication system is improved, and communication experience on a user side is enhanced.

Further, when performing the antenna joint correction on the cell, the base station may evaluate whether the antenna correction is successful based on the correction evaluation parameters obtained during the antenna joint correction process, and only when the antenna correction is successful, the correction weight of this antenna joint correction may be determined based on the correction measurement amount. Otherwise, the base station may determine the current correction weight for the cell by "learning from" the historical correction weight of the same cell or "learning from" the current correction weight of the associated cell, which ensures accuracy of the correction weights, and avoids the problem that the correction weights determined based on the correction measurement amount are inaccurate and affect cell performance in the SSCG when the antenna joint correction fails.

Obviously, those skilled in the art should understand that all or some of the operations, system, functional modules/units of the device in the methods disclosed above may be implemented as software (which may be implemented by computer program code executable by a computing device), firmware, hardware, and appropriate combinations thereof. In a hardware implementation, the division between functional modules/units mentioned in the above description does not necessarily correspond to the division of physical components. For example, a physical component may have multiple functions, or a function or step may be performed by several physical components cooperatively. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium, and executed by a computing device. In some cases, operations shown or described may be performed in a different order than that herein. The computer-readable medium may include a computer storage medium (or non-transitory medium) and communication medium (or transitory medium). As known to those of ordinary skill in the art, the term computer storage medium includes volatile or non-volatile, removable or non-removable medium used in any method or technology for storing information (such as computer-readable instructions, data structures, computer program modules, or other data). The computer-readable storage media include but are not limited to a random access memory (RAM), a read-only memory (ROM), an electrically erasable programmable read only memory (EEPROM), a flash memory or other storage technologies, a compact disc read-only memory (CD-ROM), a digital versatile disk (DVD) or other optical disk storage, a magnetic cassette, a magnetic tape, a magnetic disk storage or other magnetic storage devices, or any other medium used to store desired information and that may be accessed by a computer. In addition, as known to those of ordinary skill in the art, communication medium typically includes computer readable instructions, data structures, program modules, or other data in a modulated data signal such as a carrier wave or other transport mechanism, and may include any information delivery medium. Therefore, the present disclosure is not limited to any particular combination of hardware and software.

The above content is a further detailed description of the embodiments of the present disclosure in combination with specific implementations, and it may not be considered that the specific implementations of the present disclosure are limited to these descriptions. Those of ordinary skill in the art, to which the present disclosure belongs, may make several simple deductions or substitutions without departing from the concept of the present disclosure, which should all be regarded as belonging to the protection scope of the present disclosure.

## Claims

1. An antenna correction method, comprising:
determining a correction time for an antenna joint correction for each of cells in a smart space cell group SSCG, wherein the SSCG comprises at least two cracked cells, and correction times of any two cells in the SSCG have no overlapping part;
in response to the correction time of a cell in the SSCG arriving, performing the antenna joint correction on the cell to determine a correction weight of the cell.

2. The antenna correction method according to claim 1, wherein performing the antenna joint correction on the cell to determine the correction weight of the cell comprises:
sending a standard antenna correction AC sequence;
determining a correction measurement amount of each of antenna channels based on the standard AC sequence and a receiving result for the standard AC sequence, wherein the correction measurement amount comprises an amplitude and a phase;
determining a correction weight of each of the antenna channels based on the correction measurement amount of each of the antenna channels.

3. The antenna correction method according to claim 2, wherein determining the correction weight of each of the antenna channels based on the correction measurement amount of each of the antenna channels comprises:
determining whether a current antenna joint correction of the cell is successful based on a correction evaluation parameter of each of the antenna channels, and the correction evaluation parameter is determined based on the standard AC sequence and the receiving result of the antenna channel for the standard AC sequence;
in response to the current antenna joint correction of the cell being successful, selecting a reference channel from the antenna channels of the cell;
calculating a phase difference and an amplitude difference of each of other antenna channels relative to the reference channel as the correction weight of the cell.

4. The antenna correction method according to claim 3, wherein determining the correction weight of each of the antenna channels based on the correction evaluation parameter of each of the antenna channels comprises:
in a case that the current antenna joint correction of the cell fails, then:
determining that the correction weight of the current antenna joint correction of the cell is equal to the correction weight of a n-mth antenna joint correction of the cell, if the cell currently performs the antenna joint correction for a nth time and a latest successful antenna joint correction is a n-mth time, wherein m is less than or equal to N and N is greater than or equal to 1;
determining that the correction weight of the current antenna correction of the cell is equal to the correction weight of the current antenna joint correction of an associated cell, if the cell currently performs the antenna joint correction for the nth time and the latest successful antenna joint correction is the n-mth time, and m is greater than N, or if the cell currently fails the antenna joint correction for n consecutive times, wherein the associated cell is a cell whose correlation with the cell meets requirements;
in a case that the antenna joint corrections of the cells in the SSCG all fail, issuing an alarm notification.

5. The antenna correction method according to claim 2, wherein the correction evaluation parameter comprises at least one of a signal-to-noise ratio, a channel delay, a channel power difference, and a channel error.

6. The antenna correction method according to any one of claims 1-5, wherein the antenna joint correction comprises an antenna downlink joint correction, the correction weight comprises a downlink correction weight, the correction times comprise a downlink correction time; and performing the antenna joint correction on the cell to determine the correction weight of the cell comprises:
performing the antenna downlink joint correction on the cell at the downlink correction time corresponding to the cell to determine the downlink correction weight of the cell, and at the same time, stopping, within the downlink correction time, downlink transmissions of each of terminals in the SSCG except a physical hybrid ARQ indicator channel PHICH.

7. The antenna correction method according to claim 6, wherein the antenna downlink joint correction comprises:
sending a first standard AC sequence through each of antenna transmitting channels of the cell;
collecting a first AC signal actually sent by each of the antenna transmitting channels through a downlink correction port;
determining a downlink correction measurement amount of each of the antenna transmitting channels based on the first AC signal and the first standard AC sequence;
determining a downlink correction weight of each of the antenna transmitting channels based on the downlink correction measurement amount of each of the antenna transmitting channels.

8. The antenna correction method according to claim 6, wherein the antenna correction method further comprises:
sending an ACK indicating a successful scheduling to a corresponding terminal through the PHICH for all uplink services in the SSCG that have not fed back a response within the downlink correction time.

9. The antenna correction method according to claim 8, wherein after sending the ACK indicating the successful scheduling to the corresponding terminal through the PHICH for all the uplink services in the SSCG that have not fed back the response, the method further comprises:
determining services that fails to be actually scheduled among uplink services responded at the downlink correction time after the current antenna joint correction is completed;
rescheduling the services that fail to be actually scheduled.

10. The antenna correction method according to any one of claims 1-5, wherein the antenna joint correction comprises an antenna uplink joint correction, the correction weight comprises an uplink correction weight, and the correction times comprise an uplink correction time; and performing the antenna joint correction on the cell to determine the correction weight of the cell comprises:
performing the antenna uplink joint correction on the cell at the uplink correction time corresponding to the cell to determine the uplink correction weight of the cell, and at the same time, stopping uplink transmissions of each of terminals in the SSCG within the uplink correction time.

11. The antenna correction method according to claim 10, wherein the antenna uplink joint correction comprises:
sending a second standard AC sequence through an uplink correction port;
receiving a second AC signal sent by the uplink correction port through each of antenna receiving channels of the cell;
determining an uplink correction measurement amount of each of the antenna receiving channels based on the second AC signal and the second standard AC sequence;
determining an uplink correction weight of each of the antenna receiving channels based on the uplink correction measurement amount of each of the antenna receiving channels.

12. A base station, comprising a processor, a memory and a communication bus;
the communication bus is configured to realize connection communication between the processor and the memory;
the processor is configured to execute one or more programs stored in the memory to implement the operations of the antenna correction method according to any one of claims 1 to 11.

13. A storage medium, wherein the storage medium stores one or more programs that, when executed by one or more processors, allows the one or more processors to implement the operations of the antenna correction method according to any one of claims 1 to 11.
